# FASCICULE DE BREVET EUROPEEN

(11) **EP 3 437 081 B1**
(45) Date de publication et mention de la délivrance du brevet: **09.10.2024**
(21) Numéro de dépôt: 17713034.1
(22) Date de dépôt: 28.03.2017
(51) Int. Cl.: G08G 1/042

(54) **SYSTÈME DE DÉTECTION DE PASSAGE D'UN VÉLO**
SYSTEM ZUM ERFASSEN DES DURCHGANGS EINES FAHRRADS
SYSTEM FOR DETECTING THE PASSAGE OF A BICYCLE

(30) Priorité: 31.03.2016 FR 1652828
(43) Date de publication de la demande: 06.02.2019
(73) Titulaire: Eco Compteur, 22300 Lannion (FR)
(72) Inventeur: DUBOIS, Jean-Claude, 22300 Lannion (FR)
(74) Mandataire: Cabinet Le Guen Maillet
(86) Numéro de dépôt international: PCT/EP2017/057338
(87) Numéro de publication internationale: WO 2017/167764

(56) Documents cités:
- FR-A1- 2 860 327

## Description

La présente invention concerne un système de détection du passage d'un vélo, un système de comptage comportant un tel système de détection, ainsi qu'un procédé de détection mettant en oeuvre un tel système de détection.

Pour détecter le passage d'un vélo, il est connu d'utiliser un système de détection. Un tel système de détection comporte une bobine qui est enfouie dans le sol et forme un solénoïde et un dispositif d'alimentation et de mesure qui est électriquement connecté à la bobine pour l'alimenter électriquement et mesurer son inductance ou de toute grandeur physique proportionnelle à l'inductance, comme par exemple la fréquence du circuit RLC où `L' représente l'inductance de la boucle électromagnétique enfouie dans le sol.

Dans la présente description, on mesure la variation d'inductance, soit directement par différence entre deux inductances, soit indirectement par différence entre deux grandeurs physiques qui sont proportionnelles à l'inductance comme par exemple la fréquence propre de la bobine. Pour chaque bobine, la mesure de la variation d'inductance consiste à mesurer l'inductance, ou la grandeur physique qui lui est proportionnelle, lorsque ladite bobine est électriquement alimentée et à la comparer à une valeur de référence de l'inductance, ou de la grandeur physique qui lui est proportionnelle, qui est mesurée en dehors de toutes perturbations, lorsqu'aucun vélo n'est présent.

En fonction de la comparaison, il est alors possible d'en déduire ou non la présence d'un vélo. Par exemple, si la valeur mesurée reste dans un intervalle autour de la valeur de référence, il n'y a pas de vélo, et si la valeur mesurée sort de l'intervalle autour de la valeur de référence, il y a un vélo.

L'alimentation électrique de la bobine crée un champ magnétique qui est perturbé lorsqu'un vélo passe au-dessus de la bobine, entraînant de ce fait une variation de son inductance par rapport à l'inductance de référence hors perturbation.

Le dispositif d'alimentation et de mesure compare alors l'inductance mesurée par rapport à la valeur de référence, et en déduit le passage ou non d'un vélo.

La bobine présente des dimensions restreintes qui ne permettent pas de couvrir toute la largeur d'une voie de circulation avec une seule bobine.

Pour résoudre ce problème, il est connu de disposer plusieurs (généralement 2, voire 4) bobines les unes à côté des autres. Lorsqu'une bobine est alimentée, le champ magnétique qu'elle génère peut entraîner une variation de l'inductance des bobines voisines, ce qui peut entraîner une fausse détection de passage.

Afin de pallier ce problème, il est connu d'alimenter électriquement les bobines les unes après les autres et donc de comparer successivement l'inductance de chaque bobine par rapport à son inductance de référence.

Si un tel système de détection donne de bons résultats, lorsque le nombre de bobines alignées est réduit (de l'ordre de 4), c'est à dire tant que la largeur de la voie de circulation reste limitée, il ne permet pas de détecter correctement les passages lorsque la voie de circulation devient trop large. En effet, avec un tel système de détection comprenant un grand nombre de bobines, le temps d'inactivité de chaque bobine devient trop important ce qui peut entraîner des absences de détection bien qu'un vélo soit passé.

Le document FR-A-2 860 327 divulgue un système de détection de passage de vélo par boucles à induction.

Un objet de la présente invention est de proposer un système de détection du passage d'un vélo qui ne présente pas les inconvénients de l'art antérieur et qui en particulier permet d'élargir la surface couverte par le système de détection sans perte de détection.

A cet effet, est proposé un système de détection de passage d'un vélo sur une voie de circulation, ledit système de détection comportant :
- un ensemble principal de bobines, de rang 1 à N avec N>1, disposées selon une implantation particulière,
- au moins un ensemble secondaire de bobines, de rang 1 à N, disposées selon la même implantation particulière et chaque bobine de rang n (1≤n≤N) dudit ensemble secondaire est au même endroit dans l'implantation particulière que la bobine de même rang n (1≤n≤N) de l'ensemble principal,
- un dispositif principal d'alimentation et de mesure électriquement connecté à chaque bobine de l'ensemble principal pour alimenter électriquement et successivement chacune desdites bobines avec un délai d'activation de T0 entre deux bobines successives et mesurer leurs inductances et comparer les inductances mesurées à des inductances de références mesurées hors perturbation,
- pour chaque ensemble secondaire, un dispositif secondaire d'alimentation et de mesure électriquement connecté à chaque bobine dudit ensemble secondaire pour alimenter électriquement et successivement chacune desdites bobines avec le délai d'activation de T0 entre deux bobines successives et mesurer leurs inductances et comparer les inductances mesurées à des inductances de références mesurées hors perturbation, et
- un dispositif de mémorisation connecté au dispositif principal d'alimentation et de mesure et à chaque dispositif secondaire d'alimentation et de mesure, et agencé pour récupérer régulièrement les informations relatives au nombre de vélos détectés par chaque ensemble,
ledit système de détection étant caractérisé en ce que chaque dispositif secondaire d'alimentation et de mesure est synchronisé avec le dispositif principal d'alimentation et de mesure pour alimenter simultanément la bobine de rang 1 de l'ensemble principal et la bobine de rang 1 de chaque ensemble secondaire, et en ce que
les bobines des deux ensembles sont disposées de manière alignée pour couvrir toute la largeur de la voie de circulation.

Selon un mode de réalisation particulier, l'implantation particulière est une ligne de quatre bobines.

Selon un mode de réalisation particulier, l'implantation particulière est un rectangle de quatre bobines.

L'invention propose également un système de comptage comportant un système de détection selon l'une des variantes précédentes, où le dispositif de mémorisation comptabilise le nombre total de vélos détectés par le système de détection.

L'invention propose également un procédé de détection mis en oeuvre par un système de détection selon l'une des variantes précédentes, le procédé comportant :
- une étape d'initialisation au cours de laquelle le dispositif principal d'alimentation et de mesure initialise un rang n à 1,
- une étape de synchronisation au cours de laquelle le dispositif principal d'alimentation et de mesure envoie un signal de synchronisation à chaque dispositif secondaire d'alimentation et de mesure,
- une étape d'activation au cours de laquelle le dispositif principal d'alimentation et de mesure et chaque dispositif secondaire d'alimentation et de mesure activent simultanément la bobine de rang 1 de l'ensemble principal, et la bobine de rang 1 de chaque ensemble secondaire,
- une étape globale de maintien d'activation au cours de laquelle le dispositif principal d'alimentation et de mesure et chaque dispositif secondaire d'alimentation et de mesure maintiennent l'activation de chaque bobine de rang 1 pendant le délai T0,
- une étape globale de désactivation au cours de laquelle le dispositif principal d'alimentation et de mesure et chaque dispositif secondaire d'alimentation et de mesure désactivent chaque bobine de rang 1,
- une étape d'incrémentation au cours de laquelle le dispositif principal d'alimentation et de mesure et chaque dispositif secondaire d'alimentation et de mesure incrémentent le rang n de 1,
- une étape d'activation au cours de laquelle le dispositif principal d'alimentation et de mesure et chaque dispositif secondaire d'alimentation et de mesure activent la bobine de rang n de l'ensemble principal, et la bobine de rang n de chaque ensemble secondaire,
- une étape de maintien d'activation au cours de laquelle le dispositif principal d'alimentation et de mesure et chaque dispositif secondaire d'alimentation et de mesure maintiennent l'activation de chaque bobine de rang n pendant le délai T0,
- une étape de désactivation au cours de laquelle le dispositif principal d'alimentation et de mesure et chaque dispositif secondaire d'alimentation et de mesure désactivent chaque bobine de rang n,
- une étape de test au cours de laquelle le dispositif principal d'alimentation et de mesure et le dispositif secondaire d'alimentation et de mesure comparent le rang n à N,
   si n=N, le procédé boucle sur l'étape d'initialisation,
   si n<N, le procédé boucle sur l'étape d'incrémentation.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre une vue de dessus d'un système de détection selon un premier mode de réalisation de l'invention,
la Fig. 2 montre une vue de dessus d'un système de détection selon un deuxième mode de réalisation de l'invention,
la Fig. 3 représente un chronogramme d'activation des bobines du système de détection selon l'invention,
la Fig. 4 montre un organigramme d'un procédé de détection selon l'invention, et
la Fig. 5 montre une unité de contrôle.

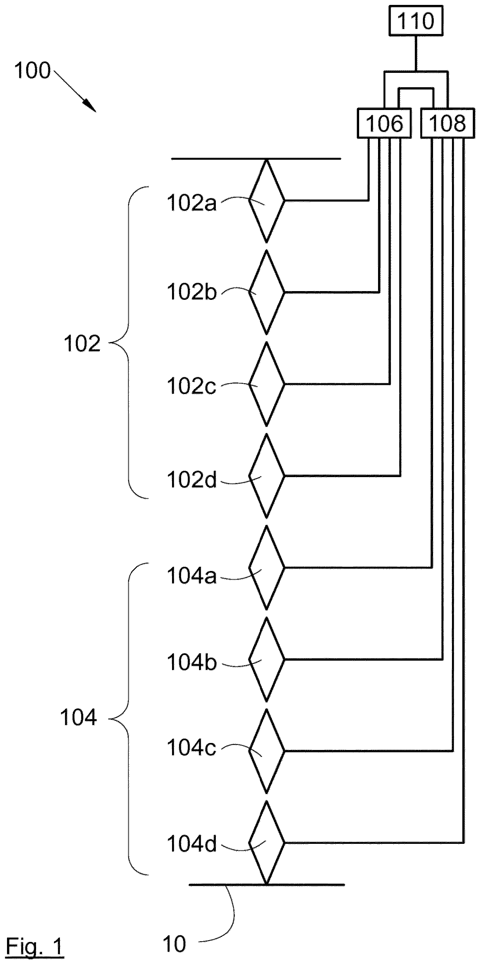

La Fig. 1 montre un système de détection 100 qui est disposé de manière à détecter les passages de vélos sur une voie de circulation 10.

Le système de détection 100 comprend :
- un ensemble principal 102 de quatre bobines 102a-d,
- un ensemble secondaire 104 de quatre bobines 104a-d,
- un dispositif principal d'alimentation et de mesure 106 électriquement connecté à chaque bobine 102a-d de l'ensemble principal 102 pour alimenter électriquement chacune desdites bobines 102a-d et mesurer leurs inductances et comparer les inductances mesurées à des inductances de références mesurées hors perturbation,
- un dispositif secondaire d'alimentation et de mesure 108 électriquement connecté à chaque bobine 104a-d de l'ensemble secondaire 104 pour alimenter électriquement chacune desdites bobines 104a-d et mesurer leurs inductances et comparer les inductances mesurées à des inductances de références mesurées hors perturbation,
- un dispositif de mémorisation 110 connecté au dispositif principal d'alimentation et de mesure 106 et au dispositif secondaire d'alimentation et de mesure 108.

Les bobines 102a-d et 104a-d sont toutes alignées de manière à couvrir toute la largeur de la voie de circulation 10. Les bobines 102a-d de l'ensemble principal 102 sont d'abord alignées les unes à côté des autres selon le sens de la largeur de la voie de circulation 10, puis les bobines 104a-d de l'ensemble secondaire 104 sont ensuite alignées les unes à côté des autres selon le sens de la largeur de la voie de circulation 10 et où la première bobine 104a de l'ensemble secondaire 104 se positionne à la suite de la dernière bobine 102d de l'ensemble principal 102 selon le sens de la largeur de la voie de circulation 10.

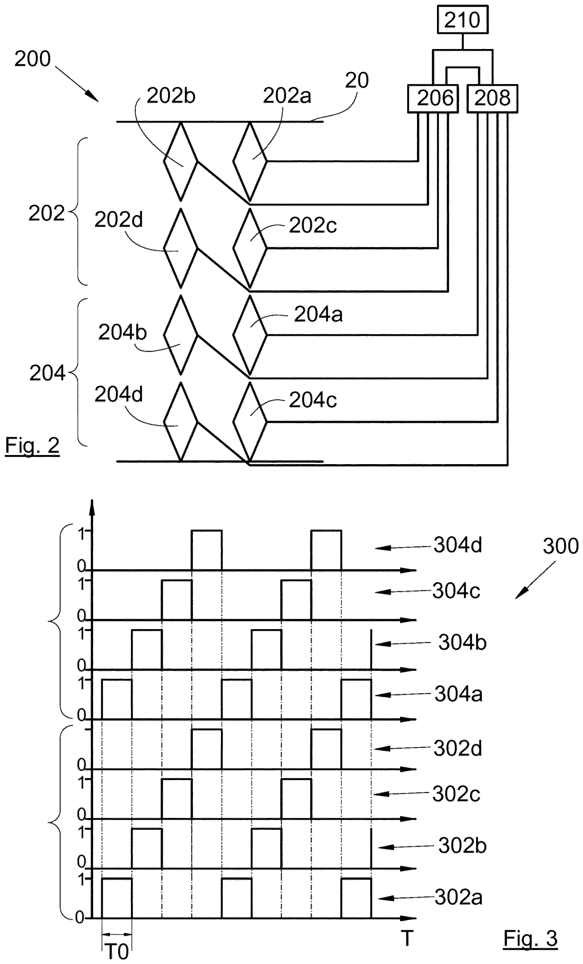

La Fig. 2 montre un système de détection 200 qui est disposé de manière à détecter les passages de vélos et leurs sens de passage sur une voie de circulation 20.

Le système de détection 200 comprend :
- un ensemble principal 202 de quatre bobines 202a-d,
- un ensemble secondaire 204 de quatre bobines 204a-d,
- un dispositif principal d'alimentation et de mesure 206 électriquement connecté à chaque bobine 202a-d de l'ensemble principal 202 pour alimenter électriquement chacune desdites bobines 202a-d et mesurer leurs inductances et comparer les inductances mesurées à des inductances de références mesurées hors perturbation,
- un dispositif secondaire d'alimentation et de mesure 208 électriquement connecté à chaque bobine 204a-d de l'ensemble secondaire 204 pour alimenter électriquement chacune desdites bobines 204a-d et mesurer leurs inductances et comparer les inductances mesurées à des inductances de références mesurées hors perturbation,
- un dispositif de mémorisation 210 connecté au dispositif principal d'alimentation et de mesure 206 et au dispositif secondaire d'alimentation et de mesure 208.

Les bobines 202a-d et 204a-d de chaque ensemble 202, 204 sont réparties en deux paires de bobines, à savoir les bobines 202a-b, respectivement 204a-b, et les bobines 202c-d, respectivement 204c-d. Les deux paires d'un même ensemble 202, 204 sont disposées l'une derrière l'autre selon un sens de circulation de la voie de circulation 20. Les deux ensembles 202 et 204 sont alignés de manière à couvrir toute la largeur de la voie de circulation 20.

D'une manière générale, chaque ensemble 102, 104, 202, 204 comporte un même nombre N (N>1) de bobines de rang 1 à N et les bobines 102a-d, 104a-d, 202ad et 204a-d de chaque ensemble 102, 104, 202, 204 sont disposées selon une même implantation particulière qui est basée sur la répétition de proche en proche d'un même schéma répétitif, soit une ligne de quatre bobines 102a-d, 104a-d, 202a-d et 204a-d dans le mode de réalisation de la Fig. 1, soit un rectangle de quatre bobines 102a-d, 104a-d, 202a-d et 204a-d dans le mode de réalisation de la Fig. 2. Dans les modes de réalisation des Figs. 1 et 2, chaque bobine prend la forme d'un losange, mais elle pourrait prendre une autre forme.

Les deux bobines 102a-d, 104a-d, 202a-d et 204a-d de même rang n (1≤n≤N) de chaque ensemble 102, 104, 202, 204 sont disposées au même endroit dans l'implantation particulière.

Le dispositif principal d'alimentation et de mesure 106, 206 est agencé pour réaliser une alimentation électrique séquentielle de chaque bobine 102a-d, 202a-d de l'ensemble principal 102, 202 et pour mesurer l'inductance de chaque bobine 102a-d, 202a-d ainsi alimentée et comparer l'inductance ainsi mesurée à l'inductance de référence de ladite bobine 102a-d, 202a-d. Il y a ainsi une seule bobine 102a-d, 202a-d de l'ensemble principal 102, 202 qui est activée à un moment donné.

Le dispositif secondaire d'alimentation et de mesure 108, 208 est agencé pour réaliser une alimentation électrique séquentielle de chaque bobine 104a-d, 204a-d de l'ensemble secondaire 104, 204 et pour mesurer l'inductance de chaque bobine 104ad, 204a-d ainsi alimentée et comparer l'inductance ainsi mesurée à l'inductance de référence de ladite bobine 104a-d, 204a-d. Il y a ainsi une seule bobine 104a-d, 204a-d de l'ensemble secondaire 104, 204 qui est activée à un moment donné.

La Fig. 3 montre un chronogramme 300 d'activation des bobines 102a-d et 104a-d pour le mode de réalisation de la Fig. 1, mais le chronogramme est identique pour le mode de réalisation de la Fig. 2. L'axe des ordonnées représente le temps T.

Chaque ligne du chronogramme 300 représente la séquence d'activation d'une bobine, à savoir :
- la ligne 302a représente la séquence d'activation d'une bobine 102a,
- la ligne 302b représente la séquence d'activation d'une bobine 102b,
- la ligne 302c représente la séquence d'activation d'une bobine 102c,
- la ligne 302d représente la séquence d'activation d'une bobine 102d,
- la ligne 304a représente la séquence d'activation d'une bobine 104a,
- la ligne 304b représente la séquence d'activation d'une bobine 104b,
- la ligne 304c représente la séquence d'activation d'une bobine 104c, et
- la ligne 304d représente la séquence d'activation d'une bobine 104d.

Les lignes 302a-d sont donc les séquences d'activation gérées par le dispositif principal d'alimentation et de mesure 106, 206. Les lignes 304a-d sont donc les séquences d'activation gérées par le dispositif secondaire d'alimentation et de mesure 108, 208.

Le chronogramme 300 montre que les bobines 102a-d de l'ensemble principal 102 sont activées par le dispositif principal d'alimentation et de mesure 106 les unes à la suite des autres à partir de la bobine de rang 1 (ici la bobine 102a) et que le cycle recommence après que chaque bobine 102a-d ait été activée puis désactivée. Le délai entre l'activation de deux bobines 102a-d successives est noté T0 et il est de l'ordre de 3 ms.

De la même manière, le chronogramme 300 montre que les bobines 104a-d de l'ensemble secondaire 104 sont activées les unes à la suite des autres à partir de la bobine de rang 1 (ici la bobine 104a) et que le cycle recommence après que chaque bobine 104a-d ait été activée puis désactivée. Le délai entre l'activation de deux bobines 104a-d successives est également T0.

Lorsqu'une bobine 102a-d, 104a-d, 202a-d, 204a-d est activée, le dispositif d'alimentation et de mesure associé (106, 108, 206, 208) mesure l'inductance de ladite bobine, ce qui lui permet par analyse de la variation d'inductance avec l'inductance de référence de déterminer et comptabiliser le passage ou non d'un vélo au-dessus de ladite bobine.

Le dispositif principal d'alimentation et de mesure 106, 206, et le dispositif secondaire d'alimentation et de mesure 108, 208, sont synchronisés de manière à activer simultanément la bobine de rang 1 102a, 202a de l'ensemble principal 102, 202 et la bobine de rang 1 104a, 204a de l'ensemble secondaire 104, 204 à chaque fois que les dispositifs d'alimentation et de mesure 106, 206, 108 et 208 activent lesdites bobines de rang 1 102a, 104a, 202a, 204a, c'est à dire à chaque début de cycle d'activation. Cette synchronisation s'effectue par l'émission d'un signal de synchronisation du dispositif principal d'alimentation et de mesure 106, respectivement 206, vers le dispositif secondaire d'alimentation et de mesure 108, respectivement 208.

Selon un mode de réalisation particulier, la synchronisation consiste pour le dispositif principal d'alimentation et de mesure 106, 206 à émettre, à chaque activation de la bobine de rang 1 102a, 202a associée, un signal d'activation représentatif du fait que ladite bobine de rang 1 102a, 202a est activée, pour le dispositif secondaire d'alimentation et de mesure 108, 208 à recevoir ce signal d'activation et à activer sa bobine de rang 1 104a, 204a associée à réception de ce signal d'activation.

Les autres bobines sont ensuite considérées comme synchronisées car elles sont activées successivement après le délai T0.

A chaque fois que la bobine 102a, 202a, 104a, 204a est activée, la synchronisation s'effectue à nouveau, évitant ainsi une dérive dans le temps.

Cette synchronisation permet d'activer les bobines 102a-d, 202a-d, 104a-d, 204a-d selon leurs implantations et permet de couvrir une surface plus importante sans risque de perte d'informations de passage.

Le dispositif de mémorisation 110, 210 est agencé pour récupérer régulièrement les informations relatives au nombre de vélos détectés par le dispositif principal d'alimentation et de mesure 106, respectivement 206, et le dispositif secondaire d'alimentation et de mesure 108, respectivement 208. Le dispositif principal d'alimentation et de mesure 106, 206 et le dispositif secondaire d'alimentation et de mesure 108, 208 sont reliés au dispositif de mémorisation 110, 210 par un bus de communication.

Le dispositif de mémorisation 110, 210 comptabilise ainsi le nombre total de vélos détectés et peut transmettre cette information à un centre de surveillance.

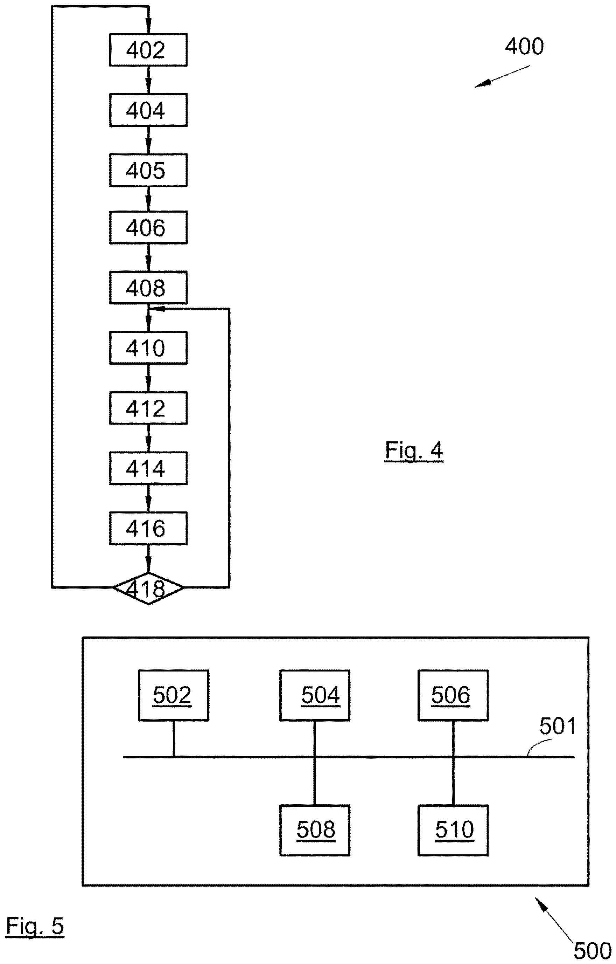

Chaque dispositif principal d'alimentation et de mesure 106, 206, chaque dispositif secondaire d'alimentation et de mesure 108, 208 et chaque dispositif de mémorisation 110, 210 prennent chacun de préférence la forme d'une unité de contrôle 500 représentée schématiquement à la Fig. 5.

L'unité de contrôle 500 comprend par exemple, reliés par un bus de communication 501: un processeur 502 ou CPU (« Central Processing Unit » en anglais) ; une mémoire vive RAM 504 (« Random Access Memory » en anglais) ; une mémoire morte ROM 506 (« Read Only Memory » en anglais) ; une unité de stockage telle qu'une mémoire SPI 508 ; au moins une interface de communication 510, permettant par exemple à l'unité de contrôle 500 du dispositif de mémorisation 110, 210, de communiquer avec les unités de contrôle 500 des dispositifs d'alimentation et de mesure 106 et 108 (respectivement 206 et 208).

Le processeur 502 est capable d'exécuter des instructions chargées dans la RAM à partir de la ROM, d'une mémoire externe (non représentée), d'un support de stockage (tel qu'une carte SD). Lorsque l'équipement est mis sous tension, le processeur est capable de lire de la RAM des instructions et de les exécuter. Ces instructions forment un programme d'ordinateur causant la mise en oeuvre, par le processeur, de tout ou partie des algorithmes et étapes décrits en relation avec la Fig. 4.

Tout ou une partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

Les mesures d'inductance et les comparaisons par rapport aux inductances de référence et la comptabilisation du nombre de vélos sont assurées par les processeurs 502 des dispositifs d'alimentation et de mesure 106, 206, 108, 208.

La Fig. 4 montre un organigramme d'un procédé de détection 400 utilisant l'un ou l'autre des systèmes de détection 100, 200 décrits ci-dessus. Le procédé comporte :
- une étape d'initialisation 402 au cours de laquelle le dispositif principal d'alimentation et de mesure 106, 206 initialise un rang n à 1,
- une étape de synchronisation 404 au cours de laquelle le dispositif principal d'alimentation et de mesure 106, 206 envoie un signal de synchronisation au dispositif secondaire d'alimentation et de mesure 108, 208,
- une étape d'activation 405 au cours de laquelle le dispositif principal d'alimentation et de mesure 106, 206 et le dispositif secondaire d'alimentation et de mesure 108, 208 activent simultanément la bobine de rang 1 102a, 202a de l'ensemble principal 102, 202, et la bobine de rang 1 104a, 204a de l'ensemble secondaire 104, 204,
- une étape globale de maintien d'activation 406 au cours de laquelle le dispositif principal d'alimentation et de mesure 106, 206 et le dispositif secondaire d'alimentation et de mesure 108, 208 maintiennent l'activation de chaque bobine de rang 1 pendant le délai T0,
- une étape globale de désactivation 408 au cours de laquelle le dispositif principal d'alimentation et de mesure 106, 206 et le dispositif secondaire d'alimentation et de mesure 108, 208 désactivent chaque bobine de rang 1,
- une étape d'incrémentation 410 au cours de laquelle le dispositif principal d'alimentation et de mesure 106, 206 et le dispositif secondaire d'alimentation et de mesure 108, 208 incrémentent le rang n de la bobine à activer,
- une étape d'activation 412 au cours de laquelle le dispositif principal d'alimentation et de mesure 106, 206 et le dispositif secondaire d'alimentation et de mesure 108, 208 activent la bobine de rang n 102c-d, 202c-d de l'ensemble principal 102, 202, et la bobine de rang n 104c-d, 204c-d de l'ensemble secondaire 104, 204,
- une étape de maintien d'activation 414 au cours de laquelle le dispositif principal d'alimentation et de mesure 106, 206 et le dispositif secondaire d'alimentation et de mesure 108, 208 maintiennent l'activation de chaque bobine de rang n pendant le délai T0,
- une étape de désactivation 416 au cours de laquelle le dispositif principal d'alimentation et de mesure 106, 206 et le dispositif secondaire d'alimentation et de mesure 108, 208 désactivent chaque bobine de rang n,
- une étape de test 418 au cours de laquelle le dispositif principal d'alimentation et de mesure 106, 206 et le dispositif secondaire d'alimentation et de mesure 108, 208 comparent le rang n à N,
   si n=N, le procédé boucle sur l'étape d'initialisation 402,
   si n<N, le procédé boucle sur l'étape d'incrémentation 410.

La mesure d'inductance de chaque bobine et la comparaison à son inductance de référence s'effectuent lorsque cette bobine est activée.

Chaque système de détection 100, 200 décrit ci-dessus peut être intégré à un système de comptage comportant ledit système de détection 100, 200 où le dispositif de mémorisation 110, 210 comptabilise le nombre de vélos détectés par le système de détection 100, 200.

Dans chaque mode de réalisation de l'invention présenté ici, il y a un seul ensemble secondaire, 104 ou 204, mais il pourrait y en avoir plusieurs, de manière à couvrir la totalité de la zone de passage des vélos. Dans chaque ensemble secondaire, chaque bobine de rang `n' est disposée selon la même implantation que la bobine de rang `n' de l'ensemble principal et chaque bobine de rang `n' sera activée de façon synchrone.

Le système de détection présente alors, pour chaque ensemble secondaire, un dispositif secondaire d'alimentation et de mesure associé et conforme à celui déjà décrit pour l'ensemble secondaire 104 et le dispositif de mémorisation est alors connecté à chaque dispositif d'alimentation et de mesure (principal et secondaire) pour récupérer les informations relatives au nombre de vélos détectés. Pour la synchronisation, le dispositif principal d'alimentation et de mesure 106, 206 envoie un signal de synchronisation à chaque dispositif secondaire d'alimentation et de mesure 108, 208, soit directement, soit de proche en proche. On peut ainsi élargir la portée du système de détection à 12, 16, etc. bobines.

Dans le cas de la Fig. 1, les bobines supplémentaires se placent à la suite de l'ensemble secondaire 104.

De la même manière pour la Fig. 2, il est possible de disposer de nouveaux ensembles secondaires implantés en rectangle à la suite de l'ensemble secondaire 204.

## Revendications

1. Système de détection (100, 200) de passage d'un vélo sur une voie de circulation, ledit système de détection comportant :
un ensemble principal (102, 202) de bobines (102a-d, 202a-d), de rang 1 à N avec N>1, disposées selon une implantation particulière,
au moins un ensemble secondaire (104, 204) de bobines (104a-d, 204a-d), de rang 1 à N, disposées selon la même implantation particulière et chaque bobine (104a-d, 204a-d) de rang n (1≤n≤N) dudit ensemble secondaire (104, 204) est au même endroit dans l'implantation particulière que la bobine (102a-d, 202a-d) de même rang n (1≤n≤N) de l'ensemble principal (102, 202),
un dispositif principal d'alimentation et de mesure (106, 206) électriquement connecté à chaque bobine (102a-d, 202a-d) de l'ensemble principal (102, 202) pour alimenter électriquement et successivement chacune desdites bobines (102a-d, 202a-d) avec un délai d'activation de T0 entre deux bobines successives et mesurer leurs inductances et comparer les inductances mesurées à des inductances de référence mesurées hors perturbation,
pour chaque ensemble secondaire (104, 204), un dispositif secondaire d'alimentation et de mesure (108, 208) électriquement connecté à chaque bobine (104ad, 204a-d) dudit ensemble secondaire (104, 204) pour alimenter électriquement et successivement chacune desdites bobines (104a-d, 204a-d) avec le délai d'activation de T0 entre deux bobines successives et mesurer leurs inductances et comparer les inductances mesurées à des inductances de référence mesurées hors perturbation, et
un dispositif de mémorisation (110, 210) connecté au dispositif principal d'alimentation et de mesure (106, 206) et à chaque dispositif secondaire d'alimentation et de mesure (108, 208), et agencé pour récupérer régulièrement les informations relatives au nombre de vélos détectés par chaque ensemble (102, 202, 104, 204),
ledit système de détection (100, 200) étant **caractérisé en ce que** chaque dispositif secondaire d'alimentation et de mesure (108, 208) est synchronisé avec le dispositif principal d'alimentation et de mesure (106, 206) pour alimenter simultanément la bobine de rang 1 (102a, 202a) de l'ensemble principal (102, 202) et la bobine de rang 1 (104a, 204a) de chaque ensemble secondaire (104, 204), et **en ce que** les bobines de deux ensembles sont disposées de manière alignée pour couvrir toute la largeur de la voie de circulation.

2. Système de détection (100) selon la revendication 1, **caractérisé en ce que** l'implantation particulière est une ligne de quatre bobines (102a-d, 104a-d).

3. Système de détection (200) selon la revendication 1, **caractérisé en ce que** l'implantation particulière est un rectangle de quatre bobines (202a-d, 204a-d).

4. Système de comptage comportant un système de détection (100, 200) selon l'une des revendications 1 à 3, où le dispositif de mémorisation (110, 210) comptabilise le nombre total de vélos détectés par le système de détection (100, 200).

5. Procédé de détection (400) mis en oeuvre par un système de détection (100, 200) selon l'une des revendications 1 à 3, le procédé comportant :
une étape d'initialisation (402) au cours de laquelle le dispositif principal d'alimentation et de mesure (106, 206) initialise un rang n à 1,
une étape de synchronisation (404) au cours de laquelle le dispositif principal d'alimentation et de mesure (106, 206) envoie un signal de synchronisation à chaque dispositif secondaire d'alimentation et de mesure (108, 208),
une étape d'activation (405) au cours de laquelle le dispositif principal d'alimentation et de mesure (106, 206) et chaque dispositif secondaire d'alimentation et de mesure (108, 208) activent simultanément la bobine de rang 1 (102a, 202a) de l'ensemble principal (102, 202), et la bobine de rang 1 (104a, 204a) de chaque ensemble secondaire (104, 204),
une étape globale de maintien d'activation (406) au cours de laquelle le dispositif principal d'alimentation et de mesure (106, 206) et chaque dispositif secondaire d'alimentation et de mesure (108, 208) maintiennent l'activation de chaque bobine de rang 1 pendant le délai T0,
une étape globale de désactivation (408) au cours de laquelle le dispositif principal d'alimentation et de mesure (106, 206) et chaque dispositif secondaire d'alimentation et de mesure (108, 208) désactivent chaque bobine de rang 1,
une étape d'incrémentation (410) au cours de laquelle le dispositif principal d'alimentation et de mesure (106, 206) et chaque dispositif secondaire d'alimentation et de mesure (108, 208) incrémentent le rang n de 1,
une étape d'activation (412) au cours de laquelle le dispositif principal d'alimentation et de mesure (106, 206) et chaque dispositif secondaire d'alimentation et de mesure (108, 208) activent la bobine de rang n (102c-d, 202c-d) de l'ensemble principal (102, 202), et la bobine de rang n (104c-d, 204c-d) de chaque ensemble secondaire (104, 204),
une étape de maintien d'activation (414) au cours de laquelle le dispositif principal d'alimentation et de mesure (106, 206) et chaque dispositif secondaire d'alimentation et de mesure (108, 208) maintiennent l'activation de chaque bobine de rang n pendant le délai T0,
une étape de désactivation (416) au cours de laquelle le dispositif principal d'alimentation et de mesure (106, 206) et chaque dispositif secondaire d'alimentation et de mesure (108, 208) désactivent chaque bobine de rang n,
une étape de test (418) au cours de laquelle le dispositif principal d'alimentation et de mesure (106, 206) et le dispositif secondaire d'alimentation et de mesure (108, 208) comparent le rang n à N,
si n=N, le procédé boucle sur l'étape d'initialisation (402),
si n<N, le procédé boucle sur l'étape d'incrémentation (410).

## Patentansprüche

1. System zum Erfassen (100, 200) des Durchgangs eines Fahrrads auf einer Fahrbahn, wobei das System zum Erfassen Folgendes aufweist:
eine Hauptanordnung (102, 202) von Spulen (102a-d, 202a-d) mit Rang 1 bis N mit N>1, die gemäß einem bestimmten Layout angeordnet sind,
mindestens eine sekundäre Anordnung (104, 204) von Spulen (104a-d, 204a-d) mit Rang 1 bis N, die in demselben bestimmten Layout angeordnet sind, und wobei jede Spule (104a-d, 204a-d) mit Rang n (1≤n≤N) der sekundären Anordnung (104, 204) sich in dem bestimmten Layout an derselben Stelle befindet, wie die Spule (102a-d, 202a-d) mit demselben Rang n (1≤n≤N) der Hauptanordnung (102, 202),
eine Hauptvorrichtung zur Stromversorgung und Messung (106, 206), die elektrisch mit jeder Spule (102a-d, 202a-d) der Hauptanordnung (102, 202) verbunden ist, um jede der Spulen (102a-d, 202a-d) mit einer Aktivierungsverzögerung von T0 zwischen zwei aufeinanderfolgenden Spulen nacheinander elektrisch zu versorgen und ihre Induktivitäten zu messen und die gemessenen Induktivitäten mit Referenzinduktivitäten zu vergleichen, die ohne Störung gemessen wurden,
für jede sekundäre Anordnung (104, 204) eine sekundäre Vorrichtung zur Stromversorgung und Messung (108, 208), die elektrisch mit jeder Spule (104a-d, 204a-d) der sekundären Anordnung (104, 204) verbunden ist, um jede der Spulen (104a-d, 204a-d) mit der Aktivierungsverzögerung von T0 zwischen zwei aufeinanderfolgenden Spulen nacheinander elektrisch zu versorgen und ihre Induktivitäten zu messen und die gemessenen Induktivitäten mit Referenzinduktivitäten zu vergleichen, die ohne Störung gemessen wurden, und
eine Vorrichtung zum Speichern (110, 210), die mit der Hauptvorrichtung zur Stromversorgung und Messung (106, 206) und jeder sekundären Vorrichtung zur Stromversorgung und Messung (108, 208) verbunden ist und so angeordnet ist, dass sie regelmäßig Informationen über die Anzahl der von jeder Anordnung (102, 202, 104, 204) erfassten Fahrräder abrufen kann,
wobei das System zum Erfassen (100, 200) **dadurch gekennzeichnet ist, dass** jede sekundäre Vorrichtung zur Stromversorgung und Messung (108, 208) mit der Hauptvorrichtung zur Stromversorgung und Messung (106, 206) synchronisiert ist, um gleichzeitig die Spule mit Rang 1 (102a, 202a) der Hauptanordnung (102, 202) und die Spule mit Rang 1 (104a, 204a) jeder sekundären Anordnung (104, 204) elektrisch zu versorgen, und dass die Spulen der beiden Anordnungen in einer ausgerichteten Weise angeordnet sind, um die gesamte Breite der Fahrbahn abzudecken.

2. System zum Erfassen (100) nach Anspruch 1, **dadurch gekennzeichnet, dass** das bestimmte Layout eine Reihe aus vier Spulen (102a-d, 104a-d) ist.

3. System zum Erfassen (200) nach Anspruch 1, **dadurch gekennzeichnet, dass** das bestimmte Layout ein Rechteck aus vier Spulen (202a-d, 204a-d) ist.

4. System zum Zählen mit einem System zum Erfassen (100, 200) nach einem der Ansprüche 1 bis 3, wobei die Vorrichtung zum Speichern (110, 210) die Gesamtzahl der von dem System zum Erfassen (100, 200) erfassten Fahrräder zählt.

5. Verfahren zum Erfassen (400), das von einem System zum Erfassen (100, 200) nach einem der Ansprüche 1 bis 3 durchgeführt wird, wobei das Verfahren Folgendes aufweist:
einen Schritt zum Initialisieren (402), in dem die Hauptvorrichtung zur Stromversorgung und Messung (106, 206) einen Rang n auf 1 initialisiert,
einen Schritt zum Synchronisieren (404), in dem die Hauptvorrichtung zur Stromversorgung und Messung (106, 206) ein Synchronisationssignal an jede sekundäre Vorrichtung zur Stromversorgung und Messung (108, 208) sendet,
einen Schritt zum Aktivieren (405), in dem die Hauptvorrichtung zur Stromversorgung und Messung (106, 206) und jede sekundäre Vorrichtung zur Stromversorgung und Messung (108, 208) gleichzeitig die Spule mit Rang 1 (102a, 202a) der Hauptanordnung (102, 202) und die Spule mit Rang 1 (104a, 204a) jeder sekundären Anordnung (104, 204) aktivieren,
einen globalen Aktivierungs-Halteschritt (406), in dem die Hauptvorrichtung zur Stromversorgung und Messung (106, 206) und jede sekundäre Vorrichtung zur Stromversorgung und Messung (108, 208) die Aktivierung jeder Spule mit Rang 1 während der Verzögerung T0 aufrechterhalten,
einen globalen Schritt zum Deaktivieren (408), in dem die Hauptvorrichtung zur Stromversorgung und Messung (106, 206) und jede sekundäre Vorrichtung zur Stromversorgung und Messung (108, 208) jede Spule mit Rang 1 deaktivieren,
einen Schritt zum Inkrementieren (410), in dem die Hauptvorrichtung zur Stromversorgung und Messung (106, 206) und jede sekundäre Vorrichtung zur Stromversorgung und Messung (108, 208) den Rang n um 1 inkrementieren,
einen Schritt zum Aktivieren (412), in dem die Hauptvorrichtung zur Stromversorgung und Messung (106, 206) und jede sekundäre Vorrichtung zur Stromversorgung und Messung (108, 208) die Spule mit Rang n (102c-d, 2020c-d) der Hauptanordnung (102, 202) und die Spule mit Rang n (104c-d, 204c-d) jeder sekundären Anordnung (104, 204) aktivieren,
einen Aktivierungs-Halteschritt (414), in dem die Hauptvorrichtung zur Stromversorgung und Messung (106, 206) und jede sekundäre Vorrichtung zur Stromversorgung und Messung (108, 208) das Aktivieren jeder Spule mit Rang n während der Verzögerung T0 aufrechterhalten,
einen Schritt zum Deaktivieren (416), in dem die Hauptvorrichtung zur Stromversorgung und Messung (106, 206) und jede sekundäre Vorrichtung zur Stromversorgung und Messung (108, 208) jede Spule mit Rang n deaktivieren,
einen Schritt zum Testen (418), in dem die Hauptvorrichtung zur Stromversorgung und Messung (106, 206) und die sekundäre Vorrichtung zur Stromversorgung und Messung (108, 208) den Rang n mit N vergleichen,
wenn n=N, schließt das Verfahren mit dem Schritt zum Initialisieren (402) ab,
wenn n<N, schließt das Verfahren mit dem Schritt zum Inkrementieren (410) ab.

## Claims

1. System (100, 200) for detecting the crossing of a bicycle on a traffic route, said detection system including:
a primary set (102, 202) of coils (102a-d, 202a-d), of rank 1 to N, where N>1, arranged in a particular layout,
at least one secondary set (104, 204) of coils (104a-d, 204a-d), of rank 1 to N, arranged in the same particular layout, and each coil (104a-d, 204a-d) of rank n (1≤n≤N) of said secondary set (104, 204) is in the same location in the particular layout as the coil (102a-d, 202a-d) of the same rank n (1≤n≤N) of the primary set (102, 202),
a primary power supply and measurement device (106, 206) connected electrically to each coil (102a-d, 202a-d) of the primary set (102, 202) so as to supply electric power successively to each of said coils (102a-d, 202a-d) with an activation period of TO between two successive coils and measure their inductances and compare the measured inductances with reference inductances measured without disturbance,
for each secondary set (104, 204), a secondary power supply and measurement device (108, 208) connected electrically to each coil (104a-d, 204a-d) of said secondary set (104, 204) so as to supply electric power successively to each of said coils (104a-d, 204a-d) with the activation period of TO between two successive coils and measure their inductances and compare the measured inductances with reference inductances measured without disturbance, and
a storage device (110, 210) connected to the primary power supply and measurement device (106, 206) and to each secondary power supply and measurement device (108, 208), and designed to regularly recover information relating to the number of bicycles detected by each set (102, 202, 104, 204),
said detection system (100, 200) being **characterized in that** each secondary power supply and measurement device (108, 208) is synchronized with the primary power supply and measurement device (106, 206) so as to supply power simultaneously to the coil of rank 1 (102a, 202a) of the primary set (102, 202) and the coil of rank 1 (104a, 204a) of each secondary set (104, 204) and **in that** the coils of the two sets are disposed in an aligned manner to cover the entire width of the traffic route.

2. Detection system (100) as claimed in claim 1, **characterized in that** the particular layout is a row of four coils (102a-d, 104a-d).

3. Detection system (200) as claimed in claim 1, **characterized in that** the particular layout is a rectangle of four coils (202a-d, 204a-d).

4. Counting system including a detection system (100, 200) as claimed in one of claims 1 to 3, wherein the storage device (110, 210) records the total number of bicycles detected by the detection system (100, 200).

5. Detection method (400) implemented by a detection system (100, 200) as claimed in one of claims 1 to 3, the method including:
an initialization step (402), during which the primary power supply and measurement device (106, 206) initializes a rank n at 1,
a synchronization step (404), during which the primary power supply and measurement device (106, 206) sends a synchronization signal to each secondary power supply and measurement device (108, 208),
an activation step (405), during which the primary power supply and measurement device (106, 206) and each secondary power supply and measurement device (108, 208) simultaneously activate the coil of rank 1 (102a, 202a) of the primary set (102, 202) and the coil of rank 1 (104a, 204a) of each secondary set (104, 204),
an overall step (406) of maintaining activation, during which the primary power supply and measurement device (106, 206) and each secondary power supply and measurement device (108, 208) maintain the activation of each coil of rank 1 during the period T0,
an overall deactivation step (408), during which the primary power supply and measurement device (106, 206) and each secondary power supply and measurement device (108, 208) deactivate each coil of rank 1,
an incrementation step (410), during which the primary power supply and measurement device (106, 206) and each secondary power supply and measurement device (108, 208) increment the rank n by 1,
an activation step (412), during which the primary power supply and measurement device (106, 206) and each secondary power supply and measurement device (108, 208) activate the coil of rank n (102c-d, 202c-d) of the primary set (102, 202) and the coil of rank n (104c-d, 204c-d) of each secondary set (104, 204),
a step (414) of maintaining activation, during which the primary power supply and measurement device (106, 206) and each secondary power supply and measurement device (108, 208) maintain the activation of each coil of rank n during the period T0,
a deactivation step (416), during which the primary power supply and measurement device (106, 206) and each secondary power supply and measurement device (108, 208) deactivate each coil of rank n,
a test step (418), during which the primary power supply and measurement device (106, 206) and the secondary power supply and measurement device (108, 208) compare the rank n with N,
if n=N, the method loops back to the initialization step (402),
if n<N, the method loops back to the incrementation step (410).
